# EUROPÄISCHE PATENTSCHRIFT

(11) **EP 4 127 495 B1**
(45) Veröffentlichungstag und Bekanntmachung des Hinweises auf die Patenterteilung: **07.08.2024**
(21) Anmeldenummer: 21714840.2
(22) Anmeldetag: 19.03.2021
(51) Int. Cl.: F16B 21/08, F16B 9/00, F16B 21/07

(54) **VORRICHTUNG ZUR AUSTAUSCHBAREN BEFESTIGUNG VON FORMATTEILEN**
DEVICE FOR THE EXCHANGEABLE FASTENING OF FORMAT PARTS
DISPOSITIF DE FIXATION AMOVIBLE D'ÉLÉMENTS DE FORMAT

(30) Priorität: 25.03.2020 DE 102020108181
(43) Veröffentlichungstag der Anmeldung: 08.02.2023
(73) Patentinhaber: KHS GmbH, 44143 Dortmund (DE)
(72) Erfinder: WOLF, Uwe, 55593 Rüdesheim (DE); SCHUG, Nils, 55499 Riesweiler (DE)
(86) Internationale Anmeldenummer: PCT/EP2021/057111
(87) Internationale Veröffentlichungsnummer: WO 2021/191082

(56) Entgegenhaltungen:
- EP-A1- 2 030 759
- EP-B1- 2 030 759
- CN-A- 104 058 142
- GB-A- 889 462
- US-B2- 8 567 589

## Beschreibung

Die Erfindung bezieht sich auf eine Vorrichtung zur austauschbaren Befestigung von Formatteilen.

Bei der Behandlung von Behältern, beispielsweise beim Reinigen, Füllen, Verschließen und/oder Etikettieren von Behältern, insbesondere auf dem Gebiet der Getränkeherstellung und -abfüllung, werden verschiedene Behälter mittels so genannter Behälterbehandlungsmaschinen behandelt bzw. verarbeitet. Die Behälter müssen dabei auch über Behältertransportstrecken durch die entsprechenden Maschinen sowie auch zwischen einzelnen Maschinen oder Maschinenteilen gefördert und transportiert werden, beispielsweise über rotierende Transportsterne.

Für eine Anpassung der Behälterbehandlungsmaschinen und Behältertransportstrecken an unterschiedliche Größen, Durchmesser und Formate der Behälter sind in der Regel zahlreiche formatabhängige, d.h. von der Art und/oder der Größe und/oder dem Durchmesser von Behältern abhängige Formatteile in Form von Behälterführungselementen notwendig, die bei einem Behälterwechsel, d.h. bei der Umstellung von einem Behältertyp auf einen anderen Behältertyp ausgetauscht werden müssen, damit auch die Behälter des anderen Behältertyps zuverlässig und sicher behandelt und/oder transportiert werden können.

Derartige Behälterführungselemente können zum Beispiel als Flaschenführungskurven ausgebildet sein, die Führungsteilelemente aufweisen. Das Halsführungselement kann auch als Halsführungskurve bzw. -stern und das auswechselbare Element als wechselbare Führung bzw. Sternplatte bezeichnet werden. Die Führungselemente werden als Gruppe auch häufig als "Formatteile" bezeichnet, da sie abhängig von dem Flaschenformat vorgesehen werden müssen. Üblicherweise erfolgt die Befestigung der Formatteile mittels vorgesehen Schraubverbindungen.

Bei Umstellung der Behälterbehandlungsmaschinen und Behältertransportstrecken von einem Behältertyp auf einen anderen Behältertyp, nämlich beim Formatwechsel, welcher auch als Umrüsten bezeichnet wird, müssen folglich die Formatteile ausgetauscht werden, wozu ein Lösen und Wiederherstellen der Schraubverbindungen unter Werkzeugeinsatz nötig ist. Das Lösen jeder einzelnen Schraubverbindung ist sehr zeitintensiv, und wirkt sich somit nachteilig auf die Verfügbarkeit der Behälterbehandlungsmaschine aus. Auch setzt eine derartige zeitintensive Umrüstung die Behälterbehandlungsmaschine still, so dass die Produktion unterbrochen ist.

Um den an sich zeitaufwendigen und arbeitsintensiven Austausch solcher Formatteile einfacher zu gestalten, werden im Stand der Technik bereits Formatteilschnellbefestigungen oder ein werkzeugloser Austausch von Formatteilen vorgeschlagen. Beispielsweise gibt die DE 10 2009 018 731 A1 eine Flaschenführungskurve an, bei der die Formatteile werkzeuglos ausgetauscht werden können. Ferner ist auch aus der DE 10 2013 110 048 A1 eine Formatteilschnellbefestigung bekannt, die einen werkzeuglosen Austausch von Formatteilen erlaubt. Allerdings muss bei den bekannten Befestigungen das Bedienpersonal notwendigerweise bei jedem Demontage- und Montagevorgang neben den Handlungen zum Lösen und Herstellen der Verbindung, zusätzlich Handlungen sowohl zum Entriegeln als auch zum Verriegeln vornehmen und zwar insbesondere für jede einzelne Befestigung auch mit beiden Händen.

Aus der CN 104 058 142 B ist ferner ein Wechselsystem für Bauteile einer Füllmaschine mit einem Verriegelungsmechanismus bekannt. Aus der US 8 567 589 B2 geht ferner eine Blasmaschine mit lösbaren Kupplungen mit einem Kugelgesperre als Klemmmechanismus hervor, so dass so genannte Preform-Dorne an der Blasmaschine schnell ausgetauscht werden können. Ebenso offenbart die EP 2 030 759 A1 eine Blasmaschine für Behälter mit einem Garniturenwechselsystem, bei dem ein Steckfuß mit einem zapfenartigen Endabschnitt in eine Steckaufnahme eingesteckt und durch ein Schnellwechsel-Element gesichert werden kann, wobei das Schnellwechsel-Element durch eine Kraftbeaufschlagung in eine Freigabestellung linear verschoben werden kann, um den Steckfuß aus der Steckaufnahme herauszuziehen.

Aufgabe der Erfindung ist es, eine konstruktiv einfache und kostengünstig herstellbare Vorrichtung zur austauschbaren Befestigung von Formatteilen zur Verfügung zu stellen, die eine sichere Fixierung der Formatteile an dem Maschinenbauteil gewährleistet und dabei eine im Vergleich zu den aus dem Stand der Technik bekannten Lösungen vereinfachte Handhabung während der Demontage und Montage erlaubt. Zur Lösung dieser Aufgabe ist eine Vorrichtung zur austauschbaren Befestigung von Formatteilen entsprechend dem Patentanspruch 1 ausgebildet. Ein auswechselbares Formatteil ist Gegenstand des Patentanspruchs 19.

Die vorliegende Erfindung stellt eine Vorrichtung zur austauschbaren Befestigung von Formatteilen an einem Maschinenbauteil einer Behälterbehandlungsmaschine bereit. Die Vorrichtung weist zumindest eine erste Verbindungseinheit und zumindest eine korrespondierende zweite Verbindungseinheit auf, wobei eine der Verbindungseinheiten am Formatteil und die jeweilige korrespondierende Verbindungseinheit am Maschinenbauteil befestigt ist. Die erste Verbindungseinheit weist zumindest einen sich entlang einer Bolzenachse erstreckenden Befestigungsbolzen auf und die zweite Verbindungseinheit umfasst zumindest eine zur einsteckbaren Aufnahme des Befestigungsbolzens ausgebildete verriegelbare Aufnahme mit einer Hauptachse. Ferner ist ein an der Aufnahme angeordnetes, betätigbares Verriegelungselement vorgesehen, das von zumindest einer Sperrstellung in wenigstens eine Freigabestellung bewegbar ist. Die Vorrichtung zeichnet sich insbesondere dadurch aus, dass das Verriegelungselement derart ausgebildet und eingerichtet ist, dass es selbsttätig die Sperrstellung einnimmt und dass Mittel vorgesehen sind, um im verbundenen Zustand der Verbindungseinheiten das Verriegelungselement mittels Betätigung in die Freigabestellung zu zwingen.

Ganz besonders vorteilhaft wird mit der vorliegenden Erfindung eine Vorrichtung zur austauschbaren Befestigung von Formatteilen an einem Maschinenbauteil bereitgestellt, die auf besonders einfache und schnelle Weise die Demontage und Montage von Formatteilen erlaubt und die sich insbesondere auch für ein einhändiges Wechseln der Formatteile eignet. Die Vorrichtung kann vorliegend auch als Schnellbefestigung oder Formatteilschnellbefestigung verstanden werden. Insbesondere bildet die Vorrichtung eine sich selbsttätig, automatisch sichernde Verbindung nach Art einer Rast-Steck-Verbindung, bei der lediglich zum Lösen der Verbindung, nämlich bei der Demontage eine Entsicherung durch Betätigung des Verriegelungselementes nötig ist. Insbesondere beim Herstellen der Verbindung, nämlich bei der Montage eines Formatteils, kann die sichere Verbindung durch einfaches Ineinanderstecken der Verbindungseinheiten erzeugt werden und der verbundene Zustand wird automatisch und selbsttätig verriegelt bzw. gesichert.

Insbesondere ist dies von Vorteil, wenn Formatteile, wie etwa Behälterführungskurven, über mehrere Vorrichtungen am Maschinenbauteil befestigt sind, da durch die selbsttätige Verriegelung bzw. Sicherung beispielsweise auch die sichere Befestigung von Formatteilen einhändig ausgeführt werden kann, bzw. das Bedienpersonal in der Lage ist, mehrere Vorrichtungen gleichzeitig zu bedienen.

Gemäß einer vorteilhaften Ausführungsvariante ist der in der Aufnahme aufgenommene Befestigungsbolzen in der Sperrstellung lagesicher und formschlüssig in der Aufnahme fixiert und ist in der Freigabestellung in axialer Richtung, nämlich in Richtung der im Verbindungszustand in einer gemeinsamen Achse zusammenfallenden Hauptachse und Bolzenachse, aus der Aufnahme herausziehbar.

Das Verriegelungselement ist insbesondere derart ausgebildet und eingerichtet, dass es bei Herstellung der Verbindung der ersten und zweiten Verbindungseinheit durch Einschieben des Befestigungsbolzens in die Aufnahme selbsttätig die Sperrstellung einnimmt, sobald der Befestigungsbolzen lagerichtig in der Aufnahme angeordnet ist. Besonders vorteilhaft kann so bei der Herstellung der Verbindung der ersten und zweiten Verbindungseinheit, nämlich bei der Montage von Formatteilen, insbesondere im Zuge eines Formatwechsels bei der Behälterbehandlungsmaschine, bei dem ein Auswechseln von Formatteilen vorzunehmen ist, eine feste, sichere, korrekte Befestigung des Formatteils durch einfaches Zusammenführen der Verbindungseinheiten sichergestellt werden, und zwar ohne zusätzliche Handgriffe für eine nötige Sicherung oder Verriegelung.

Ebenso bevorzugt wirken das Verriegelungselement und die Mittel zum Erzwingen der Freigabestellung derart zusammen, dass die durch Betätigung des Verriegelungselementes erzwungene Freigabestellung aufrechterhalten bleibt, solange der Befestigungsbolzen in der Aufnahme angeordnet ist. Auch darüber ist besonders vorteilhaft das Auswechseln von Formatteilen vereinfacht. Insbesondere wenn ein Formatteil, beispielsweise eine Behälterführungskurve, über mehrere Vorrichtungen am Maschinenbauteil befestigt ist, kann die bedienende Person zunächst nacheinander bei einer, zwei oder mehreren Vorrichtungen das Verriegelungselement betätigen und dadurch jeweils in Freigabestellung zwingen und anschließend das Formatteil demontieren. Dabei wird dann gleichzeitig bei mehreren Vorrichtungen mit bereits in Freigabestellung befindlichen Verriegelungselementen die Verbindung der jeweiligen ersten und zweiten Verbindungseinheiten getrennt, und zwar durch gleichzeitiges Herausziehen der jeweiligen Befestigungsbolzen aus den zugehörigen Aufnahmen.

Bevorzugt ist die erste Verbindungseinheit am Maschinenbauteil und die zweite Verbindungseinheit am auswechselbaren Formatteil befestigt. Beispielsweise kann der Befestigungsbolzen der ersten Verbindungseinheit am Maschinenbauteil angeschraubt sein. Ebenso kann die Aufnahme der zweiten Verbindungseinheit an dem Formatteil durch Verschrauben, oder aber auch durch Verschweißen festgelegt sein. Der Befestigungsbolzen der ersten Verbindungseinheit ist beispielsweise aus einem metallischen Werkstoff hergestellt.

Weiterhin bevorzugt ist das Verriegelungselement reversibel verformbar ausgebildet, wobei das Verriegelungselement in Abwesenheit einer äußeren Verformungskraft in einem Ausgangszustand vorliegt und wobei das Verriegelungselement vermittels einer Rückstellkraft des Verriegelungselementes aus einem durch äußere Verformungskraft herbeigeführten verformten Zustand selbsttätig wieder in den Ausgangszustand übergehen kann. Das Verriegelungselement kann daher im Wesentlichen auch als federelastisches Element oder als Federelement bezeichnet werden. Aufgrund der reversiblen Verformbarkeit, insbesondere aufgrund der federelastischen Eigenschaften des Verriegelungselementes ist die selbsttätige Einnahme der Sperrstellung weiter unterstützt und effektiv sichergestellt.

Insbesondere liegt das Verriegelungselement in der Sperrstellung in seinem Ausgangszustand vor, welcher auch als Ruhestellung oder Ruhezustand verstanden werden kann, so dass in Sperrstellung keine oder eine nur sehr geringe äußere Verformungskraft auf das Verriegelungselement einwirkt. Somit verharrt das Verriegelungselement durch Wirkung der Rückstellkraft in der Sperrstellung, und zwar solange, bis eine entgegen der Rückstellkraft gerichtete und die Rückstellkraft übersteigende äußere Verformungskraft auf das Verriegelungselement einwirkt.

Ganz besonders bevorzugt ist das Verriegelungselement aus einem Kunststoff, vorzugsweise aus einem thermoplastischen, insbesondere aus einem federelastischen Kunststoff hergestellt. Dabei sind insbesondere Kunststoffe bevorzugt, die sich für den Einsatz auf dem technischen Gebiet von Behälterbehandlungsmaschinen, beispielsweise in der Lebensmittel- und Getränkeindustrie eignen. Geeignete Kunststoffe, die eine ausreichende Elastizität aufweisen und die sich insbesondere für die Anwendung im Bereich von Behälterbehandlungsmaschinen, beispielsweise in der Lebensmittel- und Getränkeindustrie eignen, sind dem Fachmann bekannt. Insbesondere bevorzugt ist das Verriegelungselement mittels eines Spritzgießverfahrens hergestellt, wodurch eine einfache und kostengünstige Herstellung möglich ist.

Erfindungsgemäß ist das Verriegelungselement drehbeweglich, nämlich drehbar gleitend, an der Aufnahme angeordnet, wobei die Betätigung des Verriegelungselementes als eine Drehung des Verriegelungselementes relativ zur Aufnahme um die Hauptachse erfolgt und wobei an der Aufnahme eine Führung für das Verriegelungselement vorgesehen ist. Ganz besonders bevorzugt ist an dem Verriegelungselement und/oder an der Aufnahme wenigstens ein Anschlag vorgesehen, um die Drehung des Verriegelungselementes relativ zur Aufnahme zu begrenzen, derart, dass die Drehung nur über einen vorgegebenen Winkelbereich zugelassen wird. Der zumindest eine Anschlag kann vorliegend auch als Stopper oder Stoppelement bezeichnet werden und definiert durch seine Anschlagfunktion beispielsweise bei der Betätigung eine bestimmte Drehposition des Verriegelungselementes als Endposition, über die hinaus das Verriegelungselement nicht verdreht werden kann. Die Betätigung ist somit festgelegt als ein Verdrehen innerhalb eines Bereichs zwischen Ruhestellung und Endstellung.

Vorteilhaft ist die Aufnahme der zweiten Verbindungseinheit käfigartig ausgebildet und weist mehrere Ringstege sowie eine Vielzahl von sich im Wesentlichen in Richtung der Hauptachse erstreckende Verbindungsstreben auf. Die Aufnahme stellt dabei in ihrem Innenraum einen Aufnahmeraum zur wenigstens teilweisen, passgenauen Aufnahme des Befestigungsbolzens zur Verfügung. Bevorzugt sind die Ringstege in Richtung der Hauptachse aufeinanderfolgend, vorzugsweise koaxial und planparallel übereinander angeordnet und weisen beispielsweise im Wesentlichen denselben Innendurchmesser auf, welcher insbesondere an einen Außenumfang oder Außendurchmesser des Befestigungsbolzens abgestimmt ist. Die Aufnahme ist somit als nicht-massiver Körper mit einer im Wesentlichen offenen Wandungsstruktur ausgebildet und kann daher in einer insbesondere leichten, wie auch vorteilhaft materialsparenden Bauweise ausgeführt sein.

Insbesondere bevorzugt ist das Verriegelungselement wenigstens abschnittsweise zwischen zwei Ringstegen der Aufnahme geführt, wobei ferner eine oder mehrere Führungsflächen zur gleitenden Anlage des Verriegelungselementes durch wenigstens eine oder mehrere als Führungssteg dienende Verbindungsstrebe(n) gebildet sind.

Ganz besonders bevorzugt ist die Aufnahme aus einem Kunststoff, vorzugsweise aus einem thermoplastischen Kunststoff hergestellt. Dabei werden insbesondere Kunststoffe zur Herstellung der Aufnahme verwendet, die sich für den Einsatz auf dem technischen Gebiet von Behälterbehandlungsmaschinen, beispielsweise in der Lebensmittel- und Getränkeindustrie eignen und daher gut reinigbar sind und eine ausreichende Resistenz gegenüber bestimmten Chemikalien, wie zum Beispiel sauren und alkalischen Reinigungsmitteln, Desinfektionsmitteln und dergleichen aufweisen und die beispielsweise auch hitzeunempfindlich sind. Geeignete Kunststoffe, die sich insbesondere für die Anwendung im Bereich von Behälterbehandlungsmaschinen, beispielsweise in der Lebensmittel- und Getränkeindustrie eignen, sind dem Fachmann bekannt. Insbesondere bevorzugt ist die Aufnahme mittels eines Spritzgießverfahrens hergestellt, wodurch eine einfache und kostengünstige Herstellung möglich ist.

Gemäß einer insbesondere bevorzugten Ausführungsvariante weist das Verriegelungselement zumindest einen mit der Aufnahme gleitend zusammenwirkenden Halte- und Betätigungsabschnitt und wenigstens einen mit dem Befestigungsbolzen zusammenwirkenden Verriegelungsabschnitt auf. Besonders bevorzugt ist dabei der Verriegelungsabschnitt im Wesentlichen durch einen geraden, länglichen Abschnitt gebildet und der Halte- und Betätigungsabschnitt weist wenigstens einen teilkreisbogenförmig ausgebildeten Bereich auf. Ferner ist in dem Halte- und Betätigungsabschnitt in einem Übergangsbereich zum Verriegelungsabschnitt ein näherungsweise U-förmiger Umkehrbereich ausgebildet, der im Wesentlichen die Verbindung bzw. Kopplung des Halte- und Betätigungsabschnittes mit dem Verriegelungsabschnitt bildet. Der Halte- und Betätigungsabschnitt ist drehbar gleitend an der Aufnahme angeordnet und der Verriegelungsabschnitt erstreckt sich nach innen in den Innenraum der Aufnahme.

Weiterhin bevorzugt umfassen die Mittel, um im verbundenen Zustand der Verbindungseinheiten das Verriegelungselement mittels Betätigung in die Freigabestellung zu zwingen, zumindest ein an der Aufnahme vorgesehenes Zwangsführungsmittel, wobei das Zwangsführungsmittel vorzugsweise als eine das Verriegelungselement zwangsführende Schrägfläche an der Aufnahme ausgebildet ist. Diese zwangsführende Schrägfläche kann gemäß besonders bevorzugter Varianten an zumindest einem der Ringstege, zwischen denen das Verriegelungselement abschnittsweise geführt ist, vorgesehen sein.

Gemäß einer weiterhin bevorzugten Ausführungsvariante der Erfindung ist der Befestigungsbolzen im Wesentlichen pilzförmig ausgebildet und weist freiendseitig einen pilzkopfförmigen Bolzenkopfabschnitt auf, wobei in einem an den Bolzenkopfabschnitt anschließenden Bolzenschaft eine Umfangsnut ausgebildet ist. Dabei bildet insbesondere eine bolzenkopfseitige Ringfläche des Befestigungsbolzens eine erste Nutwand der Umfangsnut und eine basisseitige Ringfläche des Befestigungsbolzens bildet eine zweite Nutwand der Umfangsnut. Ganz besonders bevorzugt ist randseitig an der Ringfläche des Befestigungsbolzens eine als umlaufende Fase ausgebildete Abschrägung vorgesehen.

Die im Bolzenschaft ausgebildete Umfangsnut ist für den Eingriff des Verriegelungsabschnittes des Verriegelungselementes ausgebildet, wobei der Verriegelungsabschnitt in der Sperrstellung in die Umfangsnut eingreift, insbesondere dort einrastet, um den Befestigungsbolzen lagesicher und formschlüssig in der Aufnahme zu sichern.

Die als umlaufende Fase ausgebildete Abschrägung am Befestigungsbolzen, insbesondere am Bolzenkopfabschnitt, wirkt beispielsweise mit der an der Aufnahme, insbesondere am Ringsteg vorgesehenen zwangsführenden Schrägfläche zusammen, um die Zwangsführung des Verriegelungselementes zu bewirken und dieses aus der Sperrstellung in die Freigabestellung zu zwingen.

Hierbei gelangt beispielsweise bei Betätigung des Verriegelungselementes dessen obere Seitenkante, insbesondere im Bereich des Halte- und Betätigungsabschnittes, in Anlage an die zwangsführende Schrägfläche, wodurch das Verriegelungselement zumindest abschnittsweise in axialer Richtung entlang der Hauptachse in Richtung zum Bolzenkopfabschnitt hin bewegt bzw. verlagert, insbesondere abgelenkt wird.

Aufgrund dieser erzwungenen Verlagerung in Richtung hin zum Bolzenkopfabschnitt, wird der Verriegelungsabschnitt des Verriegelungselementes mit seiner unteren Seitenkante über die umlaufende Fase am Rand der Ringfläche gedrückt und gelangt so in seitliche Anlage an den Bolzenkopfabschnitt. Dadurch erfolgt die Verformung des Verriegelungselementes, wodurch die Freigabestellung herbeigeführt wird und der Befestigungsbolzen aus der Aufnahme lösbar ist, insbesondere in axialer Richtung herausgezogen werden kann.

Ganz besonders bevorzugt weist der Bolzenkopfabschnitt des Befestigungsbolzens an seinem freien Ende eine abgefaste Kopffläche auf, die beispielsweise bei Montage eines Formatteils, nämlich, wenn die erste und zweite Verbindungseinheit der Vorrichtung verbunden werden, das Einführen des Befestigungsbolzens in die Aufnahme erleichtert. Außerdem dient die abgefaste Kopffläche dazu, dass der Bolzenkopfabschnitt während des Einschiebens bzw. Einsteckens möglichst ungehindert in seitliche Anlage an den Verriegelungsabschnitt gelangt und diesen entgegen der Rückstellkraft von der Bolzenachse wegdrückt. Sobald der Bolzenkopfabschnitt dann den Verriegelungsabschnitt in axialer Richtung passiert hat, springt der Verriegelungsabschnitt selbsttätig aufgrund der Rückstellkraft in die Umfangsnut des Befestigungsbolzens und die Sperrstellung wird automatisch hergestellt.

Dies kann vorliegend auch als selbsttätiges Einrasten oder Verrasten des Verriegelungsabschnittes verstanden werden. Somit kann die Verbindung zwischen der ersten und zweiten Verbindungseinheit auch als eine Steckverbindung oder Rastverbindung bzw. als eine Steck-Rast-Verbindung verstanden werden.

Die Erfindung wird im Folgenden anhand der Figuren an Ausführungsbeispielen näher erläutert. Es zeigen:
- Fig. 1a, 1b: jeweils eine schematische Ansicht einer Vorrichtung gemäß einer Ausführungsform der Erfindung in einem nicht-verbundenen (Figur 1a) bzw. verbundenen Zustand (Figur 1b) der Verbindungseinheiten,
- Fig. 2a: eine Vorrichtung gemäß einer Ausführungsform der Erfindung in Sperrstellung, grob schematisch dargestellt im Schnitt mit einer senkrecht zur Hauptachse verlaufenden Schnittebene,
- Fig. 2b: eine Schnittdarstellung der Vorrichtung der Figur 2a in Freigabestellung,
- Fig. 3a: eine stark vereinfachte Schnittdarstellung einer Ausführungsform der Vorrichtung in Freigabestellung, mit einer in Richtung der Hauptachse verlaufenden Schnittebene;
- Fig. 3b: eine Schnittdarstellung der Vorrichtung der Figur 3a in Sperrstellung und
- Fig. 4: einen Ausschnitt der Aufnahme und des Verriegelungselementes stark vereinfacht und schematisch skizziert, wobei Abschnitt A einen Zustand vor Betätigung und Abschnitt B einen Zustand bei Betätigung des Verriegelungselementes zeigt.

Die in den Figuren allgemein mit 1 bezeichnete Vorrichtung ist beispielsweise als Komponente in einer Behälterbehandlungsmaschine zur austauschbaren Befestigung von Formatteilen 2 an einem Maschinenbauteil 3 eingesetzt. Die Vorrichtung 1 umfasst grundsätzlich zwei zusammenwirkende, korrespondierende und miteinander in Wirkverbindung tretende bzw. in Wirkverbindung stehende Vorrichtungsteile, nämlich eine erste und zweite Verbindungseinheit 4, 5, wobei jeweils eine der Verbindungseinheiten 4, 5 an dem Formatteil 2 und die jeweilige andere, korrespondierende Verbindungseinheit 4, 5 an dem Maschinenbauteil 3 befestigt sind, beispielsweise durch Verschraubung dort angeschraubt sind. Ebenso ist eine unlösbare Befestigung denkbar, beispielsweise durch Verschweißen, oder Verkleben, vorzugsweise auch mittels Anformen.

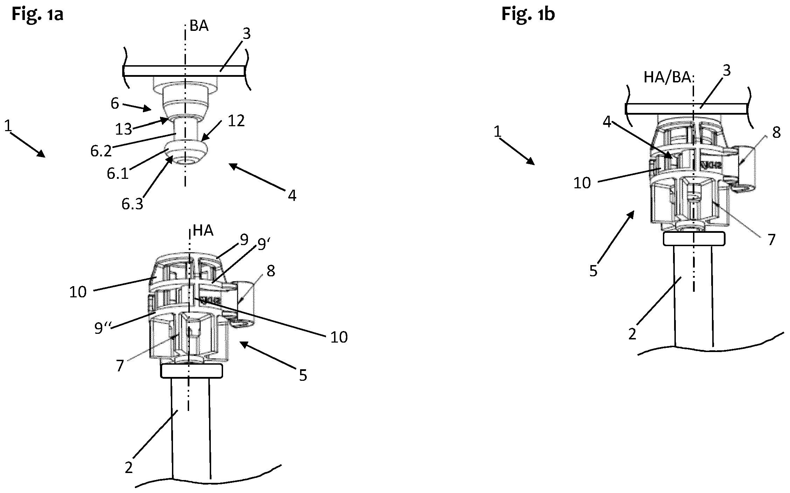

Die Figuren 1a und 1b zeigen grob schematisch skizziert ein Beispiel einer derartigen Vorrichtung 1, wobei in Figur 1a das Formatteil 2 vom Maschinenbauteil 3 abgenommen ist, so dass die Vorrichtung 1 in einem nicht verbundenen Zustand dargestellt ist, in dem die erste und zweite Verbindungseinheit 4, 5 nicht miteinander verbunden sind. Somit zeigt Figur 1a beispielsweise den Zustand nach Demontage eines Formatteils 2 (und vor erneuter Montage eines anderen Formatteils 2) beim Wechseln von Formatteilen 2. In Figur 1b ist das Formatteil 2 am Maschinenbauteil 3 befestigt, so dass die Vorrichtung 1 im verbundenen Zustand dargestellt ist, in dem die erste und zweite Verbindungseinheit 4, 5 miteinander verbunden sind. In dem Beispiel der Figuren 1a und 1b ist die erste Verbindungseinheit 4 am Maschinenbauteil 3 festgelegt und die zweite Verbindungseinheit 5 ist am wechselbaren Formatteil 2 befestigt.

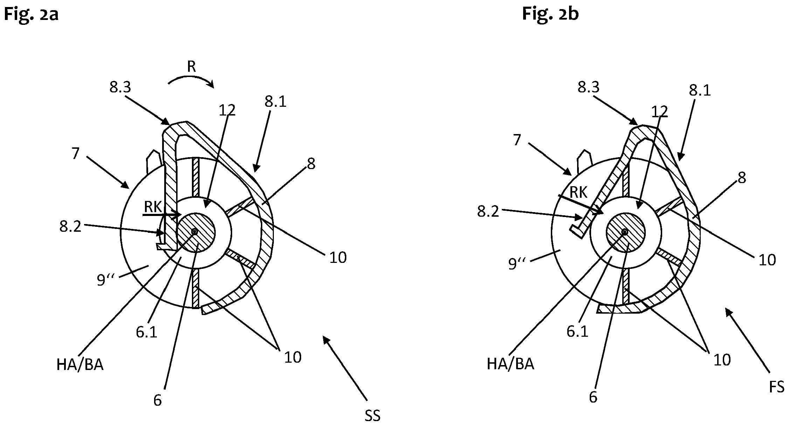

Die am Maschinenbauteil 3 festgelegte erste Verbindungseinheit 4 umfasst einen Befestigungsbolzen 6, der sich entlang einer Bolzenachse BA erstreckt. Der Befestigungsbolzen 6 ist im Wesentlichen pilzförmig ausgebildet und weist an einem freien Ende einen pilzkopfförmigen Bolzenkopfabschnitt 6.1 auf, an den sich ein Bolzenschaftabschnitt anschließt. Durch eine in dem Bolzenschaftabschnitt im Anschluss an den Bolzenkopfabschnitt 6.1 ausgebildete Umfangsnut 6.2 ist ein Abschnitt reduzierten Durchmessers ausgebildet, wobei die Umfangsnut 6.2 bzw. der dadurch definierte Abschnitt reduzierten Durchmessers einen Eingriffsabschnitt für den Eingriff eines Verriegelungselementes 8 bildet, wie nachfolgend im Zusammenhang mit den Figuren 2a, 2b mehr im Detail erläutert wird.

Der Befestigungsbolzen 6 kann beispielsweise mittels Verschraubung an dem Maschinenbauteil 3 befestigt sein. Dazu ist vorzugsweise im Bereich eines maschinenseitigen Endes des Befestigungsbolzens 6, insbesondere in seinem Basisabschnitt, eine Gewindebohrung mit einem Innengewinde eingebracht, in die beispielsweise eine herkömmliche Verbindungsschraube eingreifen kann. Der Befestigungsbolzen 6 ist vorzugsweise aus einem metallischen Werkstoff, beispielsweise aus korrosionsfestem Stahl hergestellt.

Die am Formatteil 2 befestigte zweite Verbindungseinheit 5 umfasst eine zur einsteckbaren Aufnahme des Befestigungsbolzens 6 ausgebildete, verriegelbare Aufnahme 7, die eine Hauptachse HA aufweist. Die Aufnahme 7 ist beispielsweise aus Kunststoff, vorzugsweise aus einem thermoplastischen Kunststoff hergestellt, insbesondere mittels Spritzgießen. Im verbundenen Zustand, wenn der Befestigungsbolzen 6 in der Aufnahme 7 aufgenommen ist, fallen die Bolzenachse BA und die Hauptachse HA in einer gemeinsamen Achse zusammen.

Die Aufnahme 7 des dargestellten Beispiels ist im wesentlichen korbartig bzw. käfigartig ausgebildet und stellt in ihrem Inneren einen Aufnahmeraum für den Befestigungsbolzen 6 zur Verfügung. Die Aufnahme 7 weist dabei mehrere Ringstege 9, 9', 9" und eine Vielzahl von sich im Wesentlichen entlang der Hauptachse HA erstreckenden Verbindungsstreben 10 auf, welche näherungsweise senkrecht zu den Ringstegen 9, 9', 9" verlaufen und diese vorzugsweise kreuzen, und zwar unter Ausbildung von Kreuzungsstellen. Ein freiendseitig an der Aufnahme 7 angeordneter erster Ringsteg 9 bildet im Wesentlichen ein Einführende für den Befestigungsbolzen 6 und stellt eine Einführöffnung bereit, die in Bezug auf ihren Innendurchmesser an die Dimension des Bolzenkopfabschnittes 6.1 angepasst ist. Im dargestellten Beispiel folgen in Richtung der Hauptachse HA auf den ersten Ringsteg 9 ein zweiter und dritter Ringsteg 9', 9", wobei alle Ringstege 9, 9', 9" im Wesentlichen denselben Innendurchmesser aufweisen und koaxial und planparallel übereinander angeordnet sind.

Zwischen dem zweiten und dritten Ringsteg 9', 9" der Aufnahme 7 ist ein Verriegelungselement 8 angeordnet, welches im Folgenden mehr im Detail beschrieben wird, und zwar mit Bezug auf die Figur 2a, die grob schematisch skizziert einen horizontalen Schnitt durch eine Vorrichtung 1 zeigt, und zwar in dem Bereich, in dem das Verriegelungselement 8 angeordnet ist. Wie aus Figur 2a ersichtlich ist, weist das Verriegelungselement 8 zumindest einen Halte- und Betätigungsabschnitt 8.1 mit einem teilkreisförmig ausgebildeten Bereich sowie einen im Wesentlichen gerade ausgebildeten, länglichen Verriegelungsabschnitt 8.2 auf. Der Halte- und Betätigungsabschnitt 8.1 weist dabei in einem Übergangsbereich zum Verriegelungsabschnitt 8.2 einen näherungsweise U-förmigen Umkehrbereich 8.3 auf, welcher somit die Verbindung bzw. Kopplung zwischen dem Halte- und Betätigungsabschnitt 8.1 und dem Verriegelungsabschnitt 8.2 bildet.

Der im Wesentlichen teilkreisförmige oder kreissegmentförmige Bereich des Halte- und Betätigungsabschnittes 8.1 umläuft abschnittsweise entlang eines Umfangsabschnittes die Aufnahme 7 und verläuft dabei näherungsweise konzentrisch um die Hauptachse HA der Aufnahme 7. Der Halte- und Betätigungsabschnitt 8.1 ist drehbar gleitend an der Aufnahme 7 angeordnet und ist geführt von als Führung, insbesondere als Führungsstege oder Führungsstreben dienenden Verbindungsstreben 10, welche Führungsflächen für den Halte- und Betätigungsabschnitt 8.1 definieren. Der Halte- und Betätigungsabschnitt 8.1 ist somit drehbar gleitend an der Aufnahme 7 gelagert bzw. gehalten, und zwar unter Zusammenwirkung der zweiten und dritten Ringstege 9', 9" sowie der die Führungsflächen definierenden Verbindungsstreben 10.

Der Verriegelungsabschnitt 8.2 welcher an den U-förmigen Umkehrbereich 8.3 anschließt, erstreckt sich in das Innere der Aufnahme 7 und greift somit in den Innenraum der Aufnahme 7 hinein, welcher Innenraum den Aufnahmeraum für den Befestigungsbolzen 6 bildet.

Das Verriegelungselement 8 weist aufgrund seiner Formgebung eine im Wesentlichen federnde Wirkung, insbesondere eine Rückstellwirkung auf, über die der Verriegelungsabschnitt 8.2 insbesondere im Ruhezustand, nämlich ohne äußere Krafteinwirkung, in einer Ruhestellung oder Grundstellung in vorgegebener Orientierung und vorgegebenem Abstand relativ zum Halte- und Betätigungsabschnitt 8.1 gehalten wird und zwar vermittelt durch eine auf den Verriegelungsabschnitt 8.2 wirkende Rückstellkraft RK. Bei auftretender Auslenkung des Verriegelungsabschnittes 8.2, beispielsweise bei Verformung aufgrund äußerer Krafteinwirkung, wird der Verriegelungsabschnitt 8.2 mittels der Rückstellkraft RK wieder selbsttätig in diese genannte Ruhestellung oder Grundstellung zurückversetzt, sobald die der Rückstellkraft RK entgegenwirkende äußere Kraft nachlässt bzw. aufgehoben ist, insbesondere sobald die Krafteinwirkung entfällt. Das Verriegelungselement 8 kann daher vorliegend im Wesentlichen auch als Federelement verstanden werden.

Das Verriegelungselement 8 kann durch eine Relativbewegung gegenüber der Aufnahme 7 bewegt werden, und zwar durch eine Drehung R um die Hauptachse HA, nämlich als Verdrehung relativ zur Aufnahme 7. Bei einer derartigen Drehung R, welche vorliegend als Betätigung verstanden wird, bewegt sich der Halte- und Betätigungsabschnitt 8.1 gleitend und geführt entlang der durch die mit den Ringstegen 9', 9" zusammenwirkenden Verbindungsstreben 10 definierten Führungsflächen der Aufnahme 7.

Im Verbindungszustand, wenn die erste und zweite Verbindungseinheit 4, 5 miteinander verbunden sind und der Befestigungsbolzen 6 in der Aufnahme 7 aufgenommen ist, befindet sich das Verriegelungselement 8 in einer wie in der Figur 2a gezeigten Sperrstellung SS, in der das Verriegelungselement 8 im Wesentlichen seine Grundstellung oder Ruhestellung einnimmt und der Verriegelungsabschnitt 8.2 in die an den Bolzenkopfabschnitt 6.1 anschließende Umfangsnut 6.2 des Befestigungsbolzens 6 eingreift. Dadurch ist der Befestigungsbolzen 6 lagesicher und formschlüssig im Aufnahmeraum der Aufnahme 7 gehalten und fixiert.

Der Verriegelungsabschnitt 8.2 ist in der Sperrstellung SS zwischen einer eine erste Nutwand bildenden bolzenkopfseitigen Ringfläche 12 und einer eine zweite Nutwand bildenden basisseitigen Ringfläche 13 aufgenommen. Dabei liegt eine Anlagefläche des Verriegelungsabschnittes 8.2 in dieser Sperrstellung SS an einem Nutboden der Umfangsnut 6.2 an, welcher durch die Mantelfläche des im Durchmesser reduzierten Abschnittes des Bolzenschafts gebildet ist. Ein Lösen des Befestigungsbolzens 6 aus der Aufnahme 7 durch Herausziehen in axialer Richtung und somit eine Trennung der Verbindung der ersten und zweiten Verbindungseinheiten 4, 5 ist in der Sperrstellung SS verhindert bzw. gesperrt.

Beispielsweise zum Auswechseln der Formatteile 2, insbesondere zur Demontage eines am Maschinenbauteil 3 befestigten Formatteils 2, wird das Verriegelungselement 8 betätigt, nämlich relativ zur Aufnahme 7 um die Hauptachse HA verdreht. Aufgrund der Betätigung des Verriegelungselementes 8 durch dessen Drehung R relativ zur Aufnahme 7, wird das Verriegelungselement 8 von der Sperrstellung SS in wenigstens eine, wie in Figur 2b gezeigte Freigabestellung FS bewegt bzw. gezwungen. Dazu weist die Aufnahme 7 ein Zwangsführungsmittel auf, welches das Verriegelungselement 8 aufgrund der Betätigung zwangsgeführt derart positioniert, dass der Verriegelungsabschnitt 8.2 des Verriegelungselementes 8 aus der Umfangsnut 6.2 herausgedrückt wird und seitlich am Bolzenkopfabschnitt 6.1 zur Anlage kommt. Dabei wird das Verriegelungselement 8 durch Krafteinwirkung aufgeweitet und der Verriegelungsabschnitt 8.2 mit einer entgegen der Rückstellkraft RK wirkenden Kraft von der Hauptachse HA weg und damit auch weiter vom Halte- und Betätigungsabschnitt 8.1 weg bewegt.

In dieser Freigabestellung FS kann nun der Befestigungsbolzen 6 in axialer Richtung aus dem Aufnahmeraum der Aufnahme 7 herausgezogen werden, indem das Formatteil 2, welches die zweite Verbindungseinheit 5 mit der Aufnahme 7 trägt, vom Maschinenbauteil 2 nach unten abgezogen wird, wodurch die Verbindungseinheiten 4, 5 voneinander getrennt werden. Beim Herabziehen des Formatteils 2 und dem damit einhergehenden Herausziehen des Befestigungsbolzens 6 aus der Aufnahme 7 springt der Verriegelungsabschnitt 8.2 des Verriegelungselementes 8 vermittels der Rückstellkraft RK selbsttätig wieder in seine Ruhestellung bzw. Grundstellung zurück sobald sich der Verriegelungsabschnitt 8.2 nicht mehr in seitlicher Anlage am Bolzenkopfabschnitt 6.1 befindet.

Bei der erneuten Montage des Formatteils 2, wird die Aufnahme 7 über den Befestigungsbolzen 6 gesteckt und so der Befestigungsbolzen 6 beginnend mit seinem Bolzenkopfabschnitt 6.1 in die Aufnahme 7 eingeführt. Eine auf der der Ringfläche 12 gegenüberliegenden Seite des Bolzenkopfabschnittes 6.1 ausgebildete abgefaste Kopffläche 6.3 des Bolzenkopfabschnittes 6.1 sorgt dafür, dass der Bolzenkopfabschnitt 6.1 während des Einschiebens bzw. Einsteckens in die Aufnahme 7 in seitlicher Anlage an der Anlagefläche des Verriegelungsabschnittes 8.2 den Verriegelungsabschnitt 8.2 entgegen dessen Rückstellkraft RK von der Bolzenachse BA wegdrückt. Sobald der Bolzenkopfabschnitt 6.1 den Verriegelungsabschnitt 8.2 in axialer Richtung passiert hat und der Verriegelungsabschnitt 8.2 hinter die Ringfläche 12 des Befestigungsbolzens 6 gelangt, springt der Verriegelungsabschnitt 8.2 selbsttätig aufgrund der Rückstellkraft RK in die Umfangsnut 6.2 des Befestigungsbolzens 6, wodurch die Sperrstellung SS wiederhergestellt wird. In dieser Position ist der Befestigungsbolzen 6 in der korrekten Lage und Ausrichtung im Aufnahmeraum der Aufnahme 7 angeordnet und wird in dieser Position auch gehalten. Die selbsttätige Herstellung der Sperrstellung SS kann vorliegend auch als ein Einrasten des Verriegelungsabschnittes 8.2 in die Umfangsnut 6.2 verstanden werden.

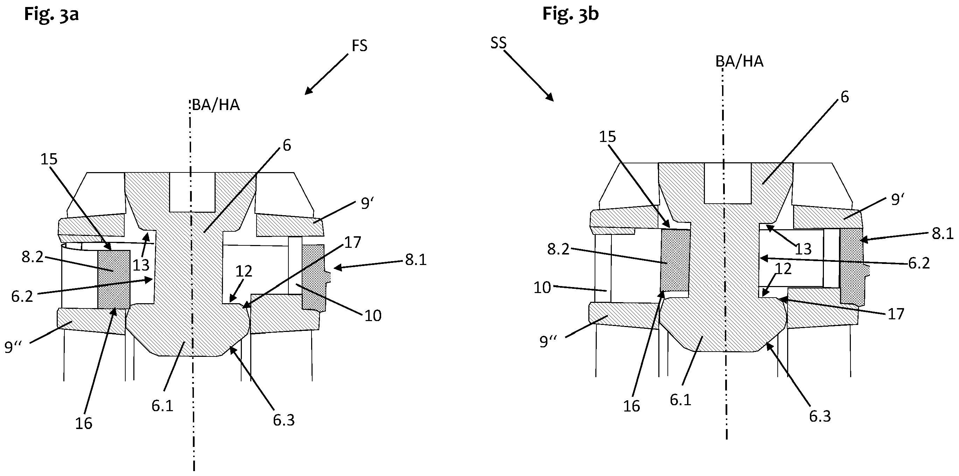

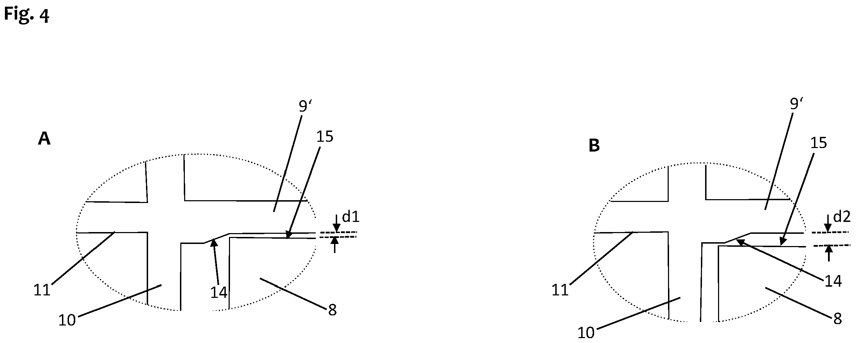

Die stark vereinfachten Darstellungen der Figuren 3a und 3b veranschaulichen noch einmal die Freigabestellung FS (Figur 3a) und die Sperrstellung SP (Figur 3b) anhand einer Schnittdarstellung mit einer in Richtung der Hauptachse HA verlaufenden Schnittebene. Weiter im Zusammenhang mit den vereinfachten, ausschnittsweise dargestellten Skizzen der Figur 4 wird ebenso der Übergang zwischen Sperrstellung SS und Freigabestellung FS aufgrund der Betätigung des Verriegelungselementes 8 besser veranschaulicht.

In der Sperrstellung SS befindet sich der Verriegelungsabschnitt 8.2 in Eingriff in der Umfangsnut 6.2 und ist dort zwischen der bolzenkopfseitigen Ringfläche 12 und der basisseitigen Ringfläche 13 aufgenommen, wobei die Anlagefläche der Innenseite des Verriegelungselementes 8 an dem Nutboden anliegt, welcher durch die Mantelfläche des Abschnittes reduzierten Durchmessers im Bolzenschaft gebildet ist. Eine obere Seitenkante 15 des Verriegelungselementes 8 ist der Ringfläche 13 und eine untere Seitenkante 16 des Verriegelungselementes 8 ist der Ringfläche 12 zugewandt. Der Verriegelungsabschnitt 8.2 ist somit eingerastet in die Umfangsnut 6.2 des Befestigungsbolzens 6 und sichert diesen in der Aufnahme 7, und zwar lagesicher und formschlüssig.

In der Sperrstellung SS befindet sich das Verriegelungselement 8 im Wesentlichen in seinem auch als Ruhestellung oder Grundstellung verstandenen Ausgangszustand, den es aufgrund der vorhandenen Rückstellkraft RK bedingt durch seine federelastischen Eigenschaften grundsätzlich einnimmt, sofern keine die Rückstellkraft RK übersteigende Verformungskraft auf das Verriegelungselement 8 einwirkt.

Um für eine Demontage des Formatteils 2 zum Wechseln desselben die Verbindungseinheiten 4, 5 voneinander trennen zu können, wird aufgrund der Betätigung des Verriegelungselementes 8 ein Übergang von der Sperrstellung SS in die Freigabestellung FG erzwungen, und zwar unter Wirkung des an der Aufnahme 7 vorgesehenen Zwangsführungsmittels und einer am Bolzenkopfabschnitt 6.1 vorgesehenen umlaufenden Schräge bzw. Fase 17.

Wie aus den stark vereinfachten Darstellungen der Figuren 3a, 3b und 4 hervorgeht, kann das Zwangsführungsmittel, durch welches das Verriegelungselement 8 bei Betätigung zwangsgeführt derart positioniert wird, dass der Verriegelungsabschnitt 8.2 des Verriegelungselementes 8 aus der Umfangsnut 6.2 herausgedrückt wird, durch eine am zweiten Ringsteg 9' ausgebildete Schrägfläche 14 gebildet sein. Die Schrägfläche 14 ist dabei insbesondere an einer dem dritten Ringsteg 9" zugewandten, unteren Seite 11 des Ringstegs 9' vorgesehen. Bei Drehung R des Verriegelungselementes 8 relativ zur Aufnahme 7 gelangt die obere Seitenkante 15 des Verriegelungselementes 8, insbesondere des Halte- und Betätigungsabschnittes 8.1 in Anlage an die Schrägfläche 14, wodurch das Verriegelungselement 8 in axialer Richtung entlang der Hauptachse HA nach unten, und zwar in Richtung zum dritten Ringsteg 9" hin, bewegt, insbesondere abgelenkt wird.

Dadurch wird das Verriegelungselement 8 zumindest abschnittsweise um einen vorgegebenen Abstand vom zweiten Ringsteg 9` weg verlagert, so dass die obere Seitenkante 15 des Verriegelungselementes 8 zumindest abschnittsweise ausgehend von einer ersten vertikalen Position mit einem ersten Abstand d1 zur unteren Seite 11 des Ringstegs 9` zu einer zweiten vertikalen Position mit einem zweiten Abstand d2 zur unteren Seite 11 des Ringstegs 9' bewegt wird. Dadurch vergrößert sich ein Spalt zwischen der unteren Seite 11 des Ringstegs 9' und der oberen Seitenkante 15 des Verriegelungselementes 8, wodurch die untere Seitenkante 16 des Verriegelungselementes 8, insbesondere des Verriegelungsabschnittes 8.2 zumindest abschnittsweise näher zum Bolzenkopfabschnitt 6.1 des Befestigungsbolzens 6 hin verschoben wird, und zwar in Richtung auf die bolzenkopfseitige Ringfläche 12 hin.

Aufgrund dieser erzwungenen Bewegung wird der Verriegelungsabschnitt 8.2, zunächst mit seiner unteren Seitenkante 16, über die am Rand der Ringfläche 12 des Befestigungsbolzens 6 vorgesehene, umlaufende Schräge bzw. Fase 17 gedrückt, um in seitliche Anlage an den Bolzenkopfaschnitt 6.1 zu gelangen, wodurch die Freigabestellung FS herbeigeführt wird. In dieser Freigabestellung FS ist nun der Befestigungsbolzen 6 nicht mehr daran gehindert, in axialer Richtung aus der Aufnahme 7 herausgezogen zu werden.

### Bezugszeichenliste

- 1: Vorrichtung
- 2: Formatteil
- 3: Maschinenbauteil
- 4: erste Verbindungseinheit
- 5: zweite Verbindungseinheit
- 6: Befestigungsbolzen
- 6.1: Bolzenkopfabschnitt
- 6.2: Umfangsnut
- 6.3: abgefaste Kopffläche
- 7: Aufnahme
- 8: Verriegelungselement
- 8.1: Halte- und Betätigungsabschnitt
- 8.2: Verriegelungsabschnitt
- 8.3: Umkehrabschnitt
- 9, 9', 9‴: erster, zweiter und dritter Ringsteg
- 10: Verbindungsstreben
- 11: untere Seite des zweiten Ringstegs
- 12: bolzenkopfseitige Ringfläche
- 13: basisseitige Ringfläche
- 14: Schrägfläche
- 15: obere Seitenkante des Verriegelungselementes
- 16: untere Seitenkante des Verriegelungselementes
- 17: Fase

- BA: Bolzenachse
- d1, d2: erster, zweiter Abstand
- HA: Hauptachse
- FS: Freigabestellung
- RK: Rückstellkraft
- SS: Sperrstellung

## Patentansprüche

1. Vorrichtung (1) zur austauschbaren Befestigung von Formatteilen (2) an einem Maschinenbauteil (3) einer Behälterbehandlungsmaschine aufweisend zumindest eine erste Verbindungseinheit (4) und zumindest eine korrespondierende zweite Verbindungseinheit (5), wobei eine der Verbindungseinheiten (4, 5) am Formatteil (2) und die jeweilige korrespondierende Verbindungseinheit (4, 5) am Maschinenbauteil (3) befestigbar ist, wobei die erste Verbindungseinheit (4) zumindest einen sich entlang einer Bolzenachse (BA) erstreckenden Befestigungsbolzen (6) aufweist und wobei die zweite Verbindungseinheit (5) zumindest eine zur einsteckbaren Aufnahme des Befestigungsbolzens (6) ausgebildete verriegelbare Aufnahme (7) mit einer Hauptachse (HA) umfasst, wobei ferner ein an der Aufnahme (7) angeordnetes, betätigbares Verriegelungselement (8) vorgesehen ist, das von zumindest einer Sperrstellung (SS) in wenigstens eine Freigabestellung (FS) bewegbar ist, wobei das Verriegelungselement (8) derart ausgebildet und eingerichtet ist, dass es selbsttätig die Sperrstellung (SS) einnimmt und dass Mittel vorgesehen sind, um im verbundenen Zustand der Verbindungseinheiten (4, 5) das Verriegelungselement (8) mittels Betätigung in die Freigabestellung (FS) zu zwingen **dadurch gekennzeichnet, dass** das Verriegelungselement (8) drehbar gleitend an der Aufnahme (7) angeordnet ist, wobei die Betätigung des Verriegelungselementes (8) als eine Drehung (R) des Verriegelungselementes (8) relativ zur Aufnahme (7) um die Hauptachse (HA) erfolgt und wobei an der Aufnahme (7) eine Führung für das Verriegelungselement (8) vorgesehen ist.

2. Vorrichtung (1) nach Anspruch 1, **dadurch gekennzeichnet, dass** der in der Aufnahme (7) aufgenommene Befestigungsbolzen (6) in der Sperrstellung (SS) lagesicher und formschlüssig in der Aufnahme (7) fixiert ist und in der Freigabestellung (FS) in axialer Richtung, nämlich in Richtung der im Verbindungszustand in einer gemeinsamen Achse zusammenfallenden Hauptachse (HA) und Bolzenachse (BA), aus der Aufnahme (7) herausziehbar ist.

3. Vorrichtung (1) nach Anspruch 1 oder 2, **dadurch gekennzeichnet, dass** das Verriegelungselement (8) derart ausgebildet und eingerichtet ist, dass es bei Herstellung der Verbindung der ersten und zweiten Verbindungseinheit (4, 5) durch Einschieben des Befestigungsbolzens (6) in die Aufnahme (7) selbsttätig die Sperrstellung (SS) einnimmt, sobald der Befestigungsbolzen (6) lagerichtig in der Aufnahme (7) angeordnet ist.

4. Vorrichtung (1) nach einem der vorhergehenden Ansprüche, **dadurch gekennzeichnet, dass** das Verriegelungselement (8) und die Mittel zum Erzwingen der Freigabestellung (FS) derart zusammenwirken, dass die durch Betätigung des Verriegelungselementes (8) erzwungene Freigabestellung (FS) aufrechterhalten bleibt, solange der Befestigungsbolzen (6) in der Aufnahme (7) angeordnet ist.

5. Vorrichtung (1) nach einem der vorhergehenden Ansprüche, **dadurch gekennzeichnet, dass** die erste Verbindungseinheit (4) am Maschinenbauteil (3) und die zweite Verbindungseinheit (5) am auswechselbaren Formatteil (2) befestigbar ist.

6. Vorrichtung (1) nach einem der vorhergehenden Ansprüche, **dadurch gekennzeichnet, dass** das Verriegelungselement (8) reversibel verformbar ausgebildet ist, wobei das Verriegelungselement (8) in Abwesenheit einer äußeren Verformungskraft in einem Ausgangszustand vorliegt und wobei das Verriegelungselement (8) vermittels einer Rückstellkraft (RK) des Verriegelungselementes (8) aus einem durch äußere Verformungskraft herbeigeführten verformten Zustand selbsttätig wieder in den Ausgangszustand übergehen kann.

7. Vorrichtung (1) nach einem der vorhergehenden Ansprüche, **dadurch gekennzeichnet, dass** die Aufnahme (7) käfigartig ausgebildet ist und mehrere Ringstege (9, 9', 9") sowie eine Vielzahl von sich im Wesentlichen in Richtung der Hauptachse (HA) erstreckende Verbindungsstreben (10) aufweist, wobei die Aufnahme (7) in ihrem Innenraum einen Aufnahmeraum zur wenigstens teilweisen, passgenauen Aufnahme des Befestigungsbolzens (6) aufweist.

8. Vorrichtung (1) nach Anspruch 7, **dadurch gekennzeichnet, dass** das Verriegelungselement (8) wenigstens abschnittsweise zwischen zwei Ringstegen (9', 9") der Aufnahme (7) geführt ist, wobei ferner eine oder mehrere Führungsflächen zur gleitenden Anlage des Verriegelungselementes (8) durch wenigstens eine oder mehrere als Führungssteg dienende Verbindungsstrebe(n) (10) gebildet sind.

9. Vorrichtung (1) nach einem der vorhergehenden Ansprüche, **dadurch gekennzeichnet, dass** die Aufnahme (7) und/oder das Verriegelungselement (8) aus einem Kunststoff, insbesondere aus einem thermoplastischen Kunststoff hergestellt sind.

10. Vorrichtung (1) nach einem der vorhergehenden Ansprüche, **dadurch gekennzeichnet, dass** das Verriegelungselement (8) zumindest einen mit der Aufnahme (7) gleitend zusammenwirkenden Halte- und Betätigungsabschnitt (8.1) und wenigstens einen mit dem Befestigungsbolzen (6) zusammenwirkenden Verriegelungsabschnitt (8.2) aufweist.

11. Vorrichtung (1) nach Anspruch 10, **dadurch gekennzeichnet, dass** der Verriegelungsabschnitt (8.2) im Wesentlichen durch einen geraden, länglichen Abschnitt gebildet ist und dass der Halte- und Betätigungsabschnitt (8.1) wenigstens einen teilkreisbogenförmig ausgebildeten Bereich aufweist, wobei der Halte- und Betätigungsabschnitt (8.1) ferner in einem Übergangsbereich zum Verriegelungsabschnitt 8.2 einen näherungsweise U-förmigen Umkehrbereich (8.3) aufweist, wobei der Halte- und Betätigungsabschnitt (8.1) drehbar gleitend an der Aufnahme (7) angeordnet ist und der Verriegelungsabschnitt (8.2) sich nach innen in den Innenraum der Aufnahme (7) erstreckt.

12. Vorrichtung (1) nach einem der vorhergehenden Ansprüche, **dadurch gekennzeichnet, dass** die Mittel, um im verbundenen Zustand der Verbindungseinheiten (4, 5) das Verriegelungselement (8) mittels Betätigung in die Freigabestellung (FS) zu zwingen, zumindest ein an der Aufnahme (7) vorgesehenes Zwangsführungsmittel umfassen, wobei das Zwangsführungsmittel vorzugsweise als eine das Verriegelungselement (8) zwangsführende Schrägfläche (14) an der Aufnahme (7) ausgebildet ist.

13. Vorrichtung (1) nach Anspruch 12, **dadurch gekennzeichnet, dass** die zwangsführende Schrägfläche (14) an zumindest einem der Ringstege (9', 9") vorgesehen ist, zwischen denen das Verriegelungselement (8) abschnittsweise geführt ist.

14. Vorrichtung (1) nach einem der vorhergehenden Ansprüche, **dadurch gekennzeichnet, dass** der Befestigungsbolzen (6) im Wesentlichen pilzförmig ausgebildet ist und freiendseitig einen pilzkopfförmigen Bolzenkopfabschnitt (6.1) aufweist, wobei in einem an den Bolzenkopfabschnitt (6.1) anschließenden Bolzenschaft eine Umfangsnut (6.2) ausgebildet ist.

15. Vorrichtung (1) nach Anspruch 14, **dadurch gekennzeichnet, dass** eine bolzenkopfseitige Ringfläche (12) des Befestigungsbolzens (6) eine erste Nutwand der Umfangsnut (6.2) bildet und eine basisseitige Ringfläche (13) des Befestigungsbolzens (6) eine zweite Nutwand der Umfangsnut (6.2) bildet.

16. Vorrichtung (1) nach Anspruch 15, **dadurch gekennzeichnet, dass** randseitig an der Ringfläche (12) des Befestigungsbolzens (6) eine als umlaufende Fase (17) ausgebildete Abschrägung vorgesehen ist.

17. Vorrichtung (1) nach einem der Ansprüche 14 bis 16, **dadurch gekennzeichnet, dass** der Bolzenkopfabschnitt (6.1) des Befestigungsbolzens (6) an seinem freien Ende eine abgefaste Kopffläche (6.3) aufweist.

18. Vorrichtung (1) nach einem der vorhergehenden Ansprüche, **dadurch gekennzeichnet, dass** die Verbindung zwischen der ersten und zweiten Verbindungseinheit (4, 5) als Steckverbindung, insbesondere als Rast-Steck-Verbindung realisiert ist.

19. Auswechselbares Formatteil (2) zur Befestigung an einem Maschinenbauteil (3) einer Behälterbehandlungsmaschine mit einer verriegelbaren Aufnahme (7) zum einsteckbaren Aufnehmen eines am Maschinenbauteil (3) angebrachten Befestigungsbolzens (6), wobei die verriegelbare Aufnahme (7) eine Hauptachse (HA) aufweist und wobei ferner ein beweglich an der Aufnahme (7) angeordnetes, betätigbares Verriegelungselement (8) vorgesehen ist, wobei das Verriegelungselement (8) derart ausgebildet und eingerichtet ist, dass es bei Herstellung einer Verbindung zwischen der Aufnahme (7) und dem am Maschinenbauteil (3) angebrachten Befestigungsbolzen (6) selbsttätig eine Sperrstellung (SS) einnimmt, in der der Befestigungsbolzen (6) lagesicher und formschlüssig in der Aufnahme (7) fixiert ist und dass Mittel vorgesehen sind, um im verbundenen Zustand zwischen der Aufnahme (7) und dem Befestigungsbolzen (6) das Verriegelungselement (8) mittels Betätigung in eine Freigabestellung (FS) zu zwingen, in der die Aufnahme (7) in axialer Richtung vom Befestigungsbolzen (6) abgezogen werden kann, **dadurch gekennzeichnet, dass** das Verriegelungselement (8) drehbar gleitend an der Aufnahme (7) angeordnet ist, wobei die Betätigung des Verriegelungselementes (8) als eine Drehung (R) des Verriegelungselementes (8) relativ zur Aufnahme (7) um die Hauptachse (HA) erfolgt und wobei an der Aufnahme (7) eine Führung für das Verriegelungselement (8) vorgesehen ist.

## Claims

1. Device (1) for the exchangeable fastening of format parts (2) to a machine component (3) of a container-processing machine, comprising at least one first connection unit (4) and at least one corresponding second connection unit (5), wherein one of the connection units (4, 5) can be secured to the format part (2), and the respective corresponding connection unit (4, 5) can be connected to the machine component (3), wherein the first connection unit (4) comprises at least one fastening bolt (6) extending along a bolt axis (BA), and wherein the second connection unit (5) comprises at least one lockable receptacle (7) with a main axis (HA) and is designed to receive the fastening bolt (6) by means of the bolt being plugged in, wherein further a locking element (8) is provided which is arranged at the receptacle (7) and can be secured to it, which can be moved from at least one blocking position (SS) into at least one release position (FS), wherein the locking element (8) is configured and arranged in such a way that it automatically adopts the blocking position (SS), and that means are provided in order, by actuation in the connected state of the connection units (4, 5), to force the locking element (8) into the release position (FS), **characterised in that** the locking element (8) is arranged in a rotating and sliding manner at the receptacle (7), wherein the actuation of the locking element (8) takes place as a rotation (R) of the locking element (8) relative to the receptacle (7) about the main axis (HA), and wherein a guide is provided at the receptacle (7) for the locking element (8).

2. Device (1) according claim 1, **characterised in that** the fastening bolt (6) received in the receptacle (7), in the blocking position (SS), is fixed in a secure position in positive fit in the receptacle (7), and in the release position (FS) can be drawn out of the receptacle (7) in the axial direction, namely in the direction of the main axis (HA), which in the connection state coincides in a common axis, and of the bolt axis (BA).

3. Device (1) according claim 1 or 2, **characterised in that** the locking element (8) is configured and aligned in such a way that, when the connection is made of the first and second connection unit (4, 5) by pushing the fastening bolt (6) into the receptacle (7), it automatically adopts the blocking position (SS) as soon as the fastening bolt (6) is arranged in the correct position in the receptacle (7).

4. Device (1) according to any one of the preceding claims, **characterised in that** the locking element (8) and the means for forcing the release position (FS) interact in such a way that the release position (FS) forced by the actuation of the blocking element (8) remains maintained for as long as the fastening bolt (6) is arranged in the receptacle (7).

5. Device (1) according to any one of the preceding claims, **characterised in that** the first connection unit (4) can be secured to the machine component (3) and the second connection unit (5) can be secured to the exchangeable format part (2).

6. Device (1) according to any one of the preceding claims, **characterised in that** the blocking element (8) is configured such that it can be reversibly deformed, wherein the blocking element (8), in the absence of an external deforming force, is present in an initial state, and wherein the blocking element (8), by means of a resetting force (RK) of the blocking element (8), can automatically move out of a deformed state, induced by an external deforming force, back into the initial state again.

7. Device (1) according to any one of the preceding claims, **characterised in that** the receptacle (7) is configured in the form of a cage, and comprises several ring webs (9, 9', 9") as well as a plurality of connecting braces (10), extending essentially in the direction of the main axis (HA), wherein the receptacle (7) comprises in its interior a reception space for the at least partial precisely fitting reception of the fastening bolt (6).

8. Device (1) according to claim 7, **characterised in that** the blocking element (8) is guided at least in sections between two ring webs (9', 9") of the receptacle (7), wherein, in addition, one or more guide surfaces for the sliding positioning of the blocking element (8) are formed by at least one or more connecting brace(s) (10), serving as a guide web.

9. Device (1) according to any one of the preceding claims, **characterised in that** the receptacle (7) and/or the blocking element (8) are made of a plastic, in particular of a thermoplastic material.

10. Device (1) according to any one of the preceding claims, **characterised in that** the blocking element (8) comprises at least one holding and actuation section (8.1) which interacts in a sliding manner with the receptacle (7), and at least one blocking section (8.2) interacting with the fastening bolt (6).

11. Device (1) according to claim 10, **characterised in that** the blocking section (8.2) is essentially formed by a straight longitudinal section, and that the holding and actuation section (8.1) comprises at least one region formed in the shape of a partial circular arc, wherein the holding and actuation section (8.1) further comprises, in a transition region to the blocking section 8.2, an approximately U-shaped reversing region (8.3), wherein the holding and actuation section (8.1) is arranged such as to rotate in a sliding manner at the receptacle (7), and the blocking section (8.2) extends inwards into the interior of the receptacle (7).

12. Device (1) according to any one of the preceding claims, **characterised in that** the means for forcing the blocking element (8), in the connected state of the connection units (4, 5), into the release position (FS) when actuated, comprise at least one forced guide means provided at the receptacle (7), wherein the forced guide means is preferably formed at the receptacle (7), as an oblique surface (14) force-guiding the blocking element (8).

13. Device (1) according to claim 12, **characterised in that** the force-guiding oblique surface (14) is provided on at least one of the ring webs (9', 9"), between which the blocking element (8) is guided in section.

14. Device (1) according to any one of the preceding claims, **characterised in that** the fastening bolt (6) is configured as essentially mushroom-shaped, and comprises on the free-end side a bolt head section (6.1) in the shape of a mushroom head, wherein a circumferential groove (6.2) is formed in a bolt shaft connecting to the bolt head section (6.1).

15. Device (1) according to claim 14, **characterised in that** a ring surface (12) of the fastening bolt (6), on the bolt head side, forms a first groove wall of the circumferential groove (6.2), and a base-side ring surface (13) of the fastening bolt (6) forms a second groove wall of the circumferential groove (6.2).

16. Device (1) according to claim 15, **characterised in that** an oblique region, configured as a circumferential chamfered edge (17), is provided on the edge side on the ring surface (12) of the fastening bolt (6).

17. Device (1) according to any one of claims 14 to 16, **characterised in that** the bolt head section (6.1) of the fastening bolt (6) comprises a chamfered head surface (6.3) at its free end.

18. Device (1) according to any one of the preceding claims, **characterised in that** the connection between the first and second connection unit (4, 5) is established as a plug connection, in particular as a click-and-plug connection.

19. Exchangeable format part (2) for securing to a machine component (3) of a container-processing machine, with a lockable receptacle (7) for the pluggable receiving of a fastening bolt (6) located on the machine component (3), wherein the lockable receptacle (7) comprises a main axis (HA), and wherein, further, an actuatable locking element (8) is provided, which is arranged on the receptacle (7), wherein the locking element (8) is configured and aligned in such a way that, when a connection is established between the receptacle (7) and the fastening bolt (6) located at the machine component (3), it automatically adopts a blocking position (SS), in which the fastening bolt (6) is fixed in a secure position and in positive fit in the receptacle (7), and that means are provided, in the connected state between the receptacle (7) and the fastening bolt (6), which on actuation force the locking element (8) into a release position (FS), in which the receptacle (7) can be drawn in the axial direction out of the fastening bolt (6), **characterised in that** the locking element (8) is arranged in a rotating and sliding manner at the receptacle (7), wherein the actuation of the locking element (8) takes place as a rotation (R) of the locking element (8) relative to the receptacle (7) about the main axis (HA), and wherein a guide is provided at the receptacle (7) for the locking element (8).

## Revendications

1. Dispositif (1) destiné à fixer de manière interchangeable des éléments de format (2) sur un composant de machine (3) d'une machine de traitement de contenants, présentant au moins une première unité de liaison (4) et au moins une deuxième unité de liaison (5) correspondante, dans lequel une des unités de liaison (4, 5) peut être fixée sur l'élément de format (2) et l'unité de liaison (4, 5) correspondante respective peut être fixée sur le composant de machine (3), dans lequel la première unité de liaison (4) présente au moins un boulon de fixation (6) s'étendant le long d'un axe de boulon (BA) et dans lequel la deuxième unité de liaison (5) comprend au moins un logement (7) avec un axe principal (HA) verrouillable réalisé pour loger de manière enfichable le boulon de fixation (6), dans lequel est prévu en outre un élément de verrouillage (8) pouvant être actionné disposé sur le logement (7), qui peut être déplacé depuis au moins une position de blocage (SS) dans au moins une position de déblocage (FS), dans lequel l'élément de verrouillage (8) est réalisé et est mis au point de telle manière qu'il adopte de manière autonome la position de blocage (SS) et que des moyens sont prévus pour forcer, dans l'état relié des unités de liaison (4, 5), l'élément de verrouillage (8) au moyen de l'actionnement dans la position de déblocage (FS), **caractérisé en ce que** l'élément de verrouillage (8) est disposé de manière à pouvoir tourner tout en glissant sur le logement (7), dans lequel l'actionnement de l'élément de verrouillage (8) est effectué en tant qu'une rotation (R) de l'élément de verrouillage (8) par rapport au logement (7) autour de l'axe principal (HA), et dans lequel un guidage pour l'élément de verrouillage (8) est prévu sur le logement (7).

2. Dispositif (1) selon la revendication 1, **caractérisé en ce que** le boulon de fixation (6) logé dans le logement (7) est fixé de manière stable en position et par complémentarité de forme dans le logement (7) dans la position de blocage (SS) et peut être retiré hors du logement (7) dans une direction axiale, à savoir en direction de l'axe principal (HA) coïncidant avec un axe commun dans l'état de liaison et de l'axe de boulon (BA) dans la position de déblocage (FS).

3. Dispositif (1) selon la revendication 1 ou 2, **caractérisé en ce que** l'élément de verrouillage (8) est réalisé et est mis au point de telle manière qu'il prend de manière autonome la position de blocage (SS) lorsque la liaison entre la première et la deuxième unité de liaison (4, 5) par enfilement du boulon de fixation (6) dans le logement (7) est établie dès que le boulon de fixation (6) est disposé dans le logement (7) dans une position correcte.

4. Dispositif (1) selon l'une quelconque des revendications précédentes, **caractérisé en ce que** l'élément de verrouillage (8) et les moyens destinés à forcer la position de déblocage (FS) coopèrent de telle manière que la position de déblocage (FS) obtenue de manière forcée par l'actionnement de l'élément de verrouillage (8) est maintenue tant que le boulon de fixation (6) est disposé dans le logement (7).

5. Dispositif (1) selon l'une quelconque des revendications précédentes, **caractérisé en ce que** la première unité de liaison (4) peut être fixée sur le composant de machine (3) et la deuxième unité de liaison (5) peut être fixée sur l'élément de format (2) interchangeable.

6. Dispositif (1) selon l'une quelconque des revendications précédentes, **caractérisé en ce que** l'élément de verrouillage (8) est réalisé avec une possibilité de déformation réversible, dans lequel l'élément de verrouillage (8) est présent dans un état de départ en l'absence d'une force de déformation extérieure et dans lequel l'élément de verrouillage (8) peut revenir d'un état déformé provoqué par une force de déformation extérieure de manière autonome dans l'état de départ au moyen d'une force de rappel (RK) de l'élément de verrouillage (8).

7. Dispositif (1) selon l'une quelconque des revendications précédentes, **caractérisé en ce que** le logement (7) est réalisé à la manière d'une cage et présente plusieurs entretoises annulaires (9, 9', 9") ainsi qu'une pluralité d'entretoises de liaison (10) s'étendant sensiblement en direction de l'axe principal (HA), dans lequel le logement (7) présente dans son espace intérieur un espace de logement destiné à loger au moins en partie de manière ajustée le boulon de fixation (6).

8. Dispositif (1) selon la revendication 7, **caractérisé en ce que** l'élément de verrouillage (8) est guidé au moins par endroits entre deux nervures annulaires (9', 9") du logement (7), dans lequel en outre une ou plusieurs surfaces de guidage sont formées pour l'appui glissant de l'élément de verrouillage (8) par au moins une ou plusieurs entretoises de liaison (10) faisant office d'entretoise de guidage.

9. Dispositif (1) selon l'une quelconque des revendications précédentes, **caractérisé en ce que** le logement (7) et/ou l'élément de verrouillage (8) sont fabriqués à partir d'une matière synthétique, en particulier à partir d'une matière synthétique thermoplastique.

10. Dispositif (1) selon l'une quelconque des revendications précédentes, **caractérisé en ce que** l'élément de verrouillage (8) présente au moins une section de maintien et d'actionnement (8.1) coopérant en glissement avec le logement (7) et au moins une section de verrouillage (8.2) coopérant avec le boulon de fixation (6).

11. Dispositif (1) selon la revendication 10, **caractérisé en ce que** la section de verrouillage (8.2) est formée sensiblement par une section droite longitudinale, et que la section de maintien et d'actionnement (8.1) présente au moins une zone réalisée en forme d'arc de cercle partiel, dans lequel la section de maintien et d'actionnement (8.1) présente en outre dans une zone de transition vers la section de verrouillage (8.2) une zone de retournement (8.3) approximativement en forme de U, dans lequel la section de maintien et d'actionnement (8.1) est disposée de manière à pouvoir tourner tout en glissant sur le logement (7) et la section de verrouillage (8.2) s'étend vers l'intérieur dans l'espace intérieur du logement (7).

12. Dispositif (1) selon l'une quelconque des revendications précédentes, **caractérisé en ce que** les moyens pour forcer, dans l'état relié des unités de liaison (4, 5) l'élément de verrouillage (8) au moyen d'un actionnement dans la position de déblocage (FS), comprennent au moins un moyen de guidage forcé prévu sur le logement (7), dans lequel le moyen de guidage forcé est réalisé de préférence en tant qu'une surface oblique (14) de guidage forcé de l'élément de verrouillage (8) sur le logement (7).

13. Dispositif (1) selon la revendication 12, **caractérisé en ce que** la surface oblique (14) de guidage forcé est prévue sur au moins une des entretoises annulaires (9', 9"), entre lesquelles l'élément de verrouillage (8) est guidé par endroits.

14. Dispositif (1) selon l'une quelconque des revendications précédentes, **caractérisé en ce que** le boulon de fixation (6) est réalisé sensiblement en forme de champignon et présente côté extrémité libre une section de tête de boulon (6.1) en forme de tête de champignon, dans lequel une rainure périphérique (6.2) est réalisée dans une tige de boulon située dans le prolongement de la section de tête de boulon (6.1).

15. Dispositif (1) selon la revendication 14, **caractérisé en ce qu'**une surface annulaire (12) côté tête de boulon du boulon de fixation (6) forme une première paroi de rainure de la rainure périphérique (6.2) et une surface annulaire (13) côté base du boulon de fixation (6) forme une deuxième paroi de rainure de la rainure périphérique (6.2).

16. Dispositif (1) selon la revendication 15, **caractérisé en ce qu'**un chanfrein réalisé en tant que biseau périphérique (17) est prévu côté bord sur la surface annulaire (12) du boulon de fixation (6).

17. Dispositif (1) selon l'une quelconque des revendications 14 à 16, **caractérisé en ce que** la section de tête de boulon (6.1) du boulon de fixation (6) présente sur son extrémité libre une surface de tête (6.3) chanfreinée.

18. Dispositif (1) selon l'une quelconque des revendications précédentes, **caractérisé en ce que** la liaison entre la première et la deuxième unité de liaison (4, 5) est réalisée en tant que liaison enfichable, en particulier en tant que liaison enfichable par enclenchement.

19. Elément de format (2) interchangeable destiné à être fixé sur un composant de machine (3) d'une machine de traitement de contenants avec un logement (7) verrouillable destiné à loger de manière enfichable un boulon de fixation (6) installé sur le composant de machine (3), dans lequel le logement (7) verrouillable présente un axe principal (HA) et dans lequel est prévu en outre un élément de verrouillage (8) pouvant être actionné, disposé de manière mobile sur le logement (7), dans lequel l'élément de verrouillage (8) est réalisé et est mis au point de telle manière qu'il prend de manière autonome une position de blocage (SS) lorsqu'une liaison entre le logement (7) et le boulon de fixation (6) installé sur le composant de machine (3) est établie, dans laquelle le boulon de fixation (6) est fixé de manière stable en position et par complémentarité de forme dans le logement (7) et que des moyens sont prévus pour forcer, dans l'état relié entre le logement (7) et le boulon de fixation (6), l'élément de verrouillage (8) au moyen d'un actionnement dans une position de déblocage (FS), dans laquelle le logement (7) peut être retiré du boulon de fixation (6) dans une direction axiale, **caractérisé en ce que**
l'élément de verrouillage (8) est disposé de manière à pouvoir tourner tout en glissant sur le logement (7), dans lequel l'actionnement de l'élément de verrouillage (8) est effectué en tant qu'une rotation (R) de l'élément de verrouillage (8) par rapport au logement (7) autour de l'axe principal (HA) et dans lequel un guidage pour l'élément de verrouillage (8) est prévu sur le logement (7).
